Europäisches Patentamt

European Patent Office

Office européen des brevets

(11) Veröffentlichungsnummer: **0 349 912**
**A2**

## (12) EUROPÄISCHE PATENTANMELDUNG

(21) Anmeldenummer: 89111895.2

(51) Int. Cl.⁴: **B62D 55/02**

(22) Anmeldetag: 30.06.89

(30) Priorität: 02.07.88 DE 8808500 U

(43) Veröffentlichungstag der Anmeldung:
**10.01.90 Patentblatt 90/02**

(84) Benannte Vertragsstaaten:
**AT BE CH DE ES FR GB GR IT LI LU NL SE**

(71) Anmelder: **Striehl, Friedrich**
**Main-Neckar-Bahn-Strasse 107**
**D-6800 Mannheim 71(DE)**

(72) Erfinder: **Striehl, Friedrich**
**Main-Neckar-Bahn-Strasse 107**
**D-6800 Mannheim 71(DE)**

(74) Vertreter: **Ratzel, Gerhard, Dr.**
**Seckenheimer Strasse 36a**
**D-6800 Mannheim 1(DE)**

(54) **Gelände und Strassenfahrzeug.**

(57) Die Erfindung betrifft ein Gelände- und Straßenfahrzeug, das dadurch gekennzeichnet ist, daß es
aus mindestens einem Radpaar 1, zweier mittels je
einer Hubeinrichtung 4 senkrecht verfahrbaren Raupenpaare 2 und einer senkrecht verfahrbar angeordneten Plattform 3 besteht, wobei die Hubeinrichtung
4 aus mindestens einem, auf einer Achse 7 angeordneten Scherengelenk 5 und einem Hubzylinder 6
besteht.

Fig.1

EP 0 349 912 A2

# Gelände- und Straßenfahrzeug

Die Erfindung betrifft ein Gelände- und Straßenfahrzeug.

Fahrzeuge, die im Gelände und auf Straßen eingesetzt werden sollen, müssen sich den örtlichen Gegebenheiten anpassen können. Für den Straßeneinsatz ist eine herkömmliche Bereifung ausreichend. Für unbefestigtes Gelände hat sich das Raupenfahrwerk bewährt.

Es sind Fahrzeuge bekannt, die eine solche Kombination aufweisen. Jedoch befinden sich bei den bekannten Fahrzeugen stets beide Fahrwerksarten im Einsatz. Beim Straßeneinsatz erweist sich demzufolge das Raupenfahrwerk als geschwindigkeitshinderlich. Auch kann die Federung nur schlecht in Einklang mit der Federung des Reifenfahrwerks gebracht werden.
Beim Geländeeinsatz wiederum erweist sich das Reifenfahrwerk als hinderlich. Hierbei kann sich Erdmaterial oder sonstiges Geländematerial in das Reifenprofil einsetzen. Eine Verschmutzung der Fahrbahn beim Straßeneinsatz ist hierbei die Folge.

Ein weiterer Nachteil der bekannten Kombinationsfahrzeuge besteht darin, daß das Chassis, auf dem sich bestimmte Arbeitseinrichtungen befinden, (z. B. Bohreinheiten usw.) zu nahe am Geländeniveau angeordnet ist. Eine Höhenverstellung ohne Beeinträchtigung des Fahrwerks, ist bei den bekannten Fahrzeugen nicht möglich.

Der Erfindung liegt daher die Aufgabe zugrunde, ein Gelände- und Straßenfahrzeug bereitzustellen, das es ermöglicht, jeweils nach Bedarf Radpaare oder Raupenpaare als Fahrwerk einzusetzen, wobei über eine Hubeinrichtung das Raupenfahrwerk und die Chassisplattform senkrecht verfahrbar ist, und zwar in der Art, dar über die Höhenverstellung das Raupenfahrwerk oder das Reifenfahrwerk in Eingriff kommt.

Diese Aufgabe wird erfindungsgemäß dadurch gelöst, indem das Gelände- und Straßenfahrzeug dadurch gekennzeichnet ist,daß es aus mindestens einem Radpaar, zweier, mittels je einer Hubeinrichtung senkrecht verfahrbaren Raupenpaare und einer senrkecht verfahrbar angeordneten Plattform besteht.

Eine besondere Ausführungsform der Erfindung ist es,daß die Hubeinrichtung aus mindestens einem auf einer Achse angeordneten Scherengelenk und einem Hubzylinder besteht.

Anhand der beigefügten Zeichnungen, die ein besonders bevorzugtes Ausführungsbeispiel der Erfindung zeigen wird diese nun näher erläutert. Dabei zeigen:

Figur 1 das erfindungsgemäße Gelände- und Straßenfahrzeug im Geländeeinsatz;

Figur 2 das erfindungsgemäße Gelände- und Straßenfahrzeug im Straßeneinsatz;

Figur 3 den Hubmechanismus;

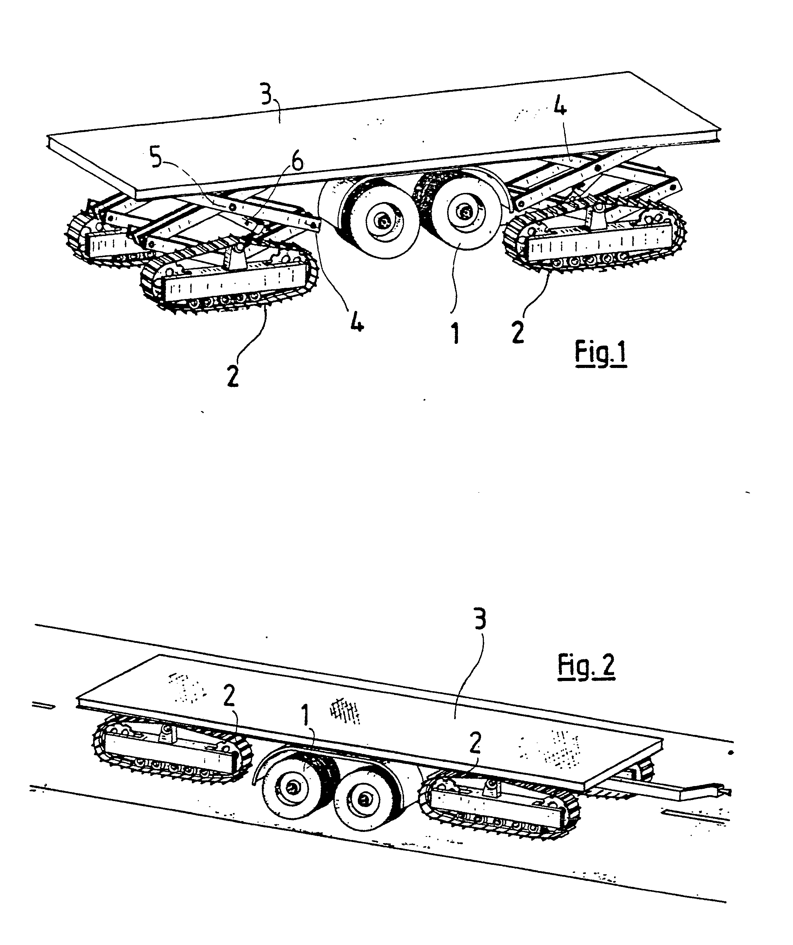

Figur 1 zeigt das erfindungsgemäße Gelände- und Straßenfahrzeug im Geländeeinsatz. In diesem Ausführungsbeispiel weist das Gelände-und Straßenfahrzeug zwei Radpaare 1 und zwei Raupenpaare 2, sowie eine Plattform 3 auf.

Zum Einsatz im Gelände, ist die Hubeinrichtung 4 derart ausgefahren, daß die Plattform 3 senkrecht nach oben angehoben wird und dabei die Raupenpaare 2 senkrecht nach unten ausgefahren werden.

Hierbei werden die von der Plattform 3 distanzfixierten Radpaare 1 mit angehoben, so daß sie nicht in das Gelände eingreifen können.

Wie hier ersichtlich, ist jedem Raupenpaar jeweils ein Paar Hubeinrichtungen zugeordnet. D.h. die Raupe hinten links, die Raupe hinten rechts, die Raupe vorne links und die Raupe vorne rechts weisen jeweils eine eigene Hubeinrichtung auf.
Es ist selbstverständlich auch im Ermessen dieser Erfindung denkbar, je Raupenpaar eine Hubeinrichtung in etwa der Mitte der Plattform anzuordnen.

Die Figur 2 zeigt das erfindungsgemäße Gelände-und Straßenfahrzeug im Straßeneinsatz. Die Hubeinrichtung ist nun derart eingefahren, daß das Fahrzeug auf den Radpaaren 1 aufsitzt und die Raupenpaare 2 die Straßenoberfläche nicht berühren können.

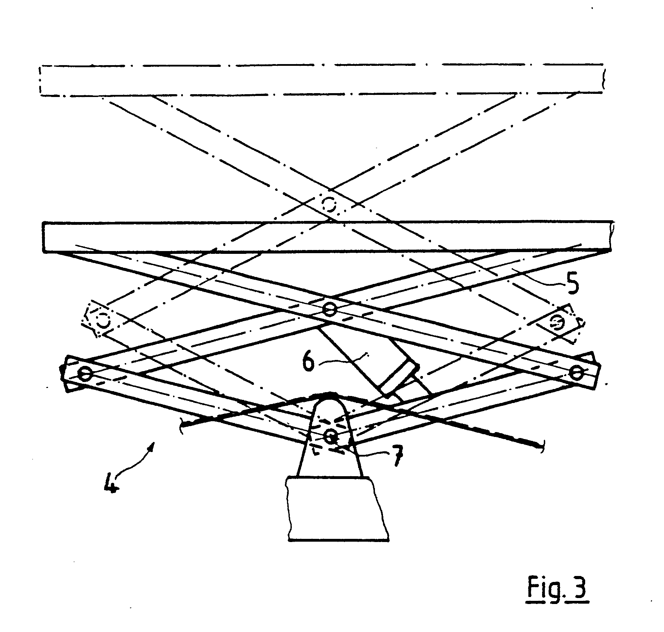

Die Figur 3 zeigt die Hubeinrichtung 4. Sie besteht im wesentlichen aus einem auf einer Achse 7 angeordnetem Scherengelenk 5 und einem Hubzylinder 6.

Mit der strichpunktierten Linie ist der ausgefahrene Zustand angedeutet.

Mit der vorliegenden Erfindung wird ein Gelände-und Straßenfahrzeug bereitgestellt, daß es nicht nur ermöglicht verschiedene Fahrwerksarten, also Radpaare oder Raupenpaare unabhängig voneinander in Einsatz zu bringen, sondern es wird ermöglicht, die Plattform, auf der sich bestimmte Arbeitseinrichtungen, wie z.B. Bohreinheiten usw. befinden, höhenverstellbar zu gestalten.

Nach einer Ausführungsform vorliegender Erfindung fährt das Fahrzeug auf den Rädern 1.

Nach einer weiteren Ausführungsform sind die Raupen außen und das Räderpaar innen, also zwischen den Raupen angeordnet.

Nach einer weiteren Ausführungsform sind die Raupen innen und jeweils ein Räderpaar außen angeordnet, d.h. die beiden Raupenpaare bzw. die Raupenpaare schlechthin sind zwischen den Räderpaaren angeordnet.

## Ansprüche

1. Gelände- und Straßenfahrzeug,
dadurch gekennzeichnet,
daß es aus mindestens einem Radpaar (1), zweier mittels je einer Hubeinrichtung (4) senkrecht verfahrbaren Raupenpaare (2) und einer senkrecht verfahrbar angeordneten Plattform (3) besteht.

2. Gelände- und Straßenfahrzeug nach Anspruch 1,
dadurch gekennzeichnet,
daß die Hubeinrichtung (4) aus mindestens einem , auf einer Achse (7) angeordnetem Scherengelenk (5) und einem Hubzylinder (6) besteht.

Fig.1

Fig. 2

Fig. 3